# EUROPEAN PATENT APPLICATION

(11) **EP 2 128 642 A1**
(43) Date of publication of application: **02.12.2009**
(21) Application number: 08156954.3
(22) Date of filing: 27.05.2008
(51) Int. Cl.: G01S 3/786

(54) **Light detection module for star tracking**

(71) Applicant: Nederlandse Organisatie voor toegepast-natuurwetenschappelijk onderzoek TNO, 2628 VK Delft (NL)
(72) Inventor: Duivenvoorde, Tom, 3584 CJ Utrecht (NL); Ouwerkerk, Bastiaan Robert, 2595 HC Den Haag (NL)
(74) Representative: Hatzmann, Martin

(57) **Abstract**

A light detector module for star tracking comprises at least two detectors (1,1'), each mounted at the bottom of a protection case (2,2'), the axes (3,3') of which protection cases being located within a common plane P1 and extending in a first angle area A1 between a first inclination angle α to a second inclination angle β. The end of each protection case is truncated by mainly of at least nearby parallel truncation planes P2, P2' which are mainly perpendicular to said plane P1 and which, moreover, incline, for each protection case, under a third inclination angle γ being within said first angle area A1. preferably, the third inclination angle γ is between a second angle area A2, mainly extending around the value (α + β) / 2, e.g. between the value ((α + β) / 2) - 15°) and ((α + β) / 2) + 15°), or to provide module symmetry equal to (α + β) / 2. Preferably, the end of each protection case are truncated by nearby parallel truncation planes P2, P2', however, having a small positive deviation angle ε e.g. between 0 and 5°.

## Description

The invention refers to a light detector module for star tracking, i.e. using star light for (artificial) satellite positioning and/or navigation.

Satellites may orbit the earth with a specific task or purpose. In most cases, the task it has to perform is related to the planet or body it is orbiting, such as measurement of the ozone layer or weather prediction. These satellites are orientated in a specific way with reference to the surface, because it has to perform its task on a specific region.

To orientate the attitude of a satellite with reference to the earth, the attitude of the satellite has to be determined. This attitude is usually determined by the detection of starlight by means of a light detection module in any form. The attitude may be calculated using an algorithm which is based on the use of two perpendicular axes. For the calculation of the attitude at least one star has to be detected in each of the two axis. With this knowledge a trajectory or attitude correction may be carried out.

Most satellites orbit a trajectory around the earth, in which they are exposed to light that is radiated by the sun. This light is approximately 10¹³ times brighter than the starlight that is to be detected. Because of the enormous difference in intensity of the light, the detector is blinded the moment it is illuminated by the sunlight. This is called "sun blinding".

In the quest to find a solution to the improvement of star trackers, the present applicant already filed a patent application related to the use of multiple apertures. Although there are many benefits gained with the use of multiple apertures, the great influence of the system layout may be a drawback. For instance, it is possible in this prior art configuration that one or more of the apertures - guiding the light to a light detector - are blinded by the sun. In this situation there should be at least two apertures detecting a star, for the star tracker to perform its tasks. The application of multiple apertures does not solve the problem of sun blinding and in worst case scenario's it will jeopardize the performance of the star tracker. In this worst case multiple apertures are blinded and the star tracker will not be able to perform its task.

In the development of a star tracker it is important to take costs and complexity of the system in to account. With an increasing number of apertures, the system gets more expensive and it is more difficult to calculate the attitude of the satellite. Simplicity of the system is therefore desired, which means the use of as few apertures (and detector) as possible. On the other hand the use of fewer apertures could jeopardize the workings of the star tracker by sun blinding, as explained above.

The present invention aims to provide a solution to this problem. According to the invention it is preferred that a light detector module for star tracking, comprises at least two detectors, each mounted at the bottom of a protection case, the axes of which protection cases being located within a common plane P1 and extending in a first angle area A1 between a first inclination angle α to a second inclination angle β, the end of each protection case being truncated by mainly of at least nearby parallel truncation planes P2, P2' etc. which are mainly perpendicular to said plane P1 and which, moreover, incline, for each protection case, under a third inclination angle γ being within said first angle area A1.

As may be clear from the following and from the figures, in all cases, i.e. at all elevation angles (altitudes) of the sun (i.e. the inclination angle of the incident sunlight), at least one of the detectors, protected by their protection cases (which preferably have a cylindrical or - more preferably - conical shape) will be not blinded by either directly or indirectly (viz. by reflection via the inner walls of the detector cases) incident light from the sun, due to said mainly of at least nearby parallel truncation planes P2, P2' etc. forming the edge of those (e.g. conical) detection cases.

In order to optimize the space needed to accommodate the detector system it may be preferred the third inclination angle γ to be between a second angle area A2, mainly extending around the value (α + β) / 2, e.g. extending between the value ((α + β) / 2) - 15°) and ((α + β) / 2) + 15°) or to be mainly equal to (α + β) / 2, the latter enabling a symmetrical configuration including detector protection cases having identical shapes.

As stated before, the end of each protection case may be truncated by mainly parallel truncation planes P2, P2' etc. However, in order to provide some extra security in the anti sun blinding capabilities of the configuration, e.g. in view of manufacture tolerances etc., it may be preferred that the end of each protection case being truncated by nearby parallel truncation planes P2, P2' etc. having a small positive deviation angle, e.g. being between 0 and 5°. In general such preferred deviation angle of the truncation planes must not pass the value of the opening angle δ of the (e.g. conical) detector case.

In this way the structure of the protection cases is used to prevent sunlight from reaching (directly or indirectly) all detectors at the same time (i.e. at any altitude of the sun).
- Figure 1: shows a schematic outline of a first exemplary embodiment of a light detector module according to the present invention;
- Figure 2: demonstrates the same embodiment at a different altitude of the sun;
- Figure 3: shows the same embodiment having another value for the inclination angle y of the mainly parallel truncation planes, indicated as y' and lying within the angle area A2;
- Figure 4: shows the effect of a small diverging angle of the truncation planes;
- Figure 5: shows an embodiment having shorter detector protection cases;
- Figure 6: shows a slightly amended embodiment w.r.t. the integral detector housing;
- Figure 7: shows the embodiment of figure 4, however having a smaller angle area A2, i.e. the angle between the central axes of both detectors.

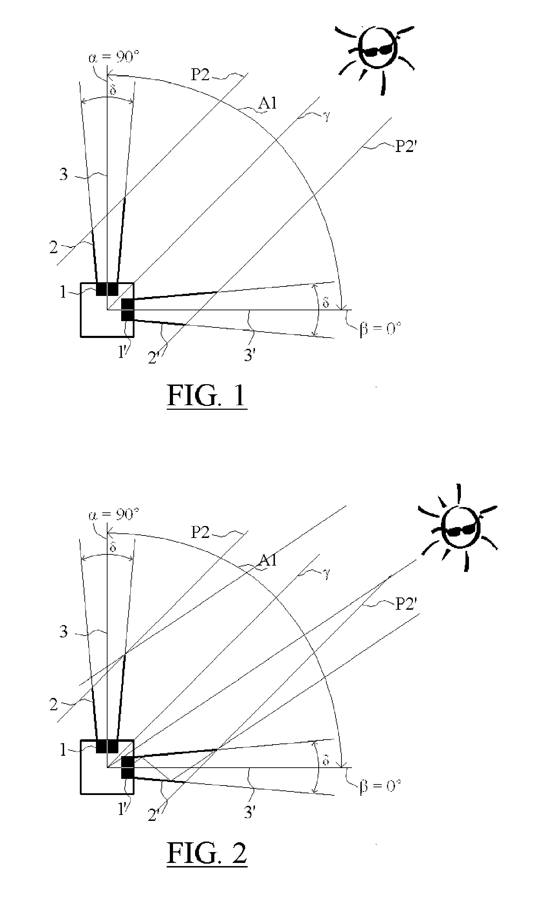

The exemplary light detector module for star tracking shown in figure 1 comprises two detectors (1,1'), each mounted at the bottom of a protection case (2,2'), the axes (3,3') of which protection cases being located within a common plane P1 equal to the plane of the drawing and extending in a first angle area A1 between a first inclination angle α to a second inclination angle β, the end of each protection case being truncated by mainly of at least nearby parallel truncation planes P2, P2' etc. which are mainly perpendicular to said plane P1 and which, moreover, incline, for each protection case, under a third inclination angle γ being within said first angle area A1.

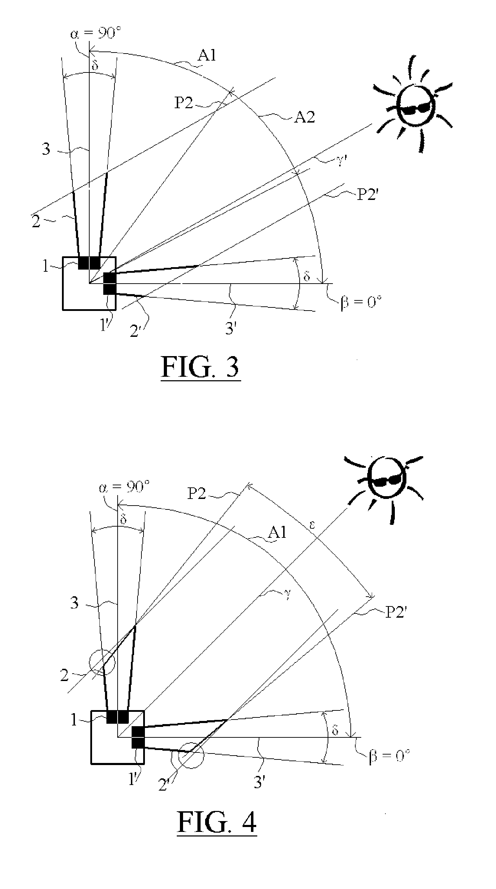

Preferably, the third inclination angle γ is between a second angle area A2, mainly extending around the value (α + β) / 2, e.g. between the value ((α + β) / 2) - 15°) and ((α + β) / 2) + 15°), as indicated in figure 3. For the sake of symmetry, is may be preferred that the third inclination angle γ is mainly equal to (α + β) / 2, which is the case in all shown exemplary embodiments except the embodiment shown in figure 3.

In the embodiments of figures 1 - 3 the end of each protection case is truncated by mainly parallel truncation planes P2, P2', inclined under the same angle γ (γ' in figure 3).

The aim of both detectors 1, 1' installed in the detection module is to detect star light (e.g. a certain star constellation), as reference for (e.g. satellite) navigation. Depending of the (moving) altitude of the sun, detector 1 or detector 1' may be blinded by the (abundant) sunlight, so always one detector (viz. the unblended one) will be able to do its job (in figure 2 detector 1' is blinded by the sunlight which is reflected by the inside of the protector case 2', while detector 1 is not blinded). In e.g. figure 1 none of both detectors 1, 1' is blinded, as the sunlight skims over the end edges of both cases 2, 2'. However, to exclude any influences from edge effects by which a fraction of the sunlight could still bend inside the detector protection cases, it is preferred, as shown in figure 4, to have the end of each protection case truncated by truncation planes P2, P2' having a small positive (i.e. diverging towards the sun) deviation angle ε, resulting in "security areas", indicated in figure 4 by circles at the lower sides of the protection cylinders 2, 2'. The deviation angle ε may lie between 0 and 5°.

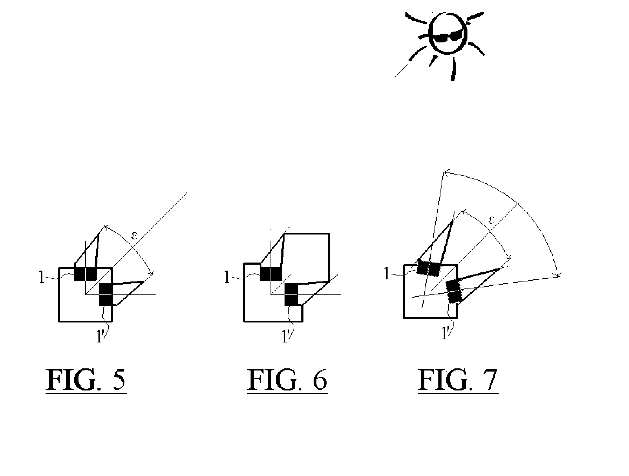

Finally, figure 5 shows an embodiment having detector protection cases with minimal length, showing that the length of the case is not important as such for a proper operation of the configuration. Figure 6 shows outlines an alternative housing for the detectors and the cases, in which the cases are more inside the housing and are an integrated part of it, which may have advantages in view of the manufacture of the complete module. Figure 7 shows an embodiment in which the angle area A1 (i.e. the difference between the inclination angles α and β of the central axes of the detector cases) is smaller than in the previous embodiments (i.e. smaller than 90°) and showing that the configuration will operate proper as well.

## Claims

1. Light detector module for star tracking, comprising at least two detectors (1,1'), each mounted at the bottom of a protection case (2,2'), the axes (3,3') of which protection cases being located within a common plane P1 and extending in a first angle area A1 between a first inclination angle α to a second inclination angle β, the end of each protection case being truncated by mainly of at least nearby parallel truncation planes P2, P2' etc. which are mainly perpendicular to said plane P1 and which, moreover, incline, for each protection case, under a third inclination angle γ being within said first angle area A1.

2. Light detector module according to claim 1, the third inclination angle γ being between a second angle area A2, mainly extending around the value (α + β) / 2.

3. Light detector module according to claim 2, the second angle area A2, extending between the value ((α + β) / 2) - 15°) and ((α + β) / 2) + 15°).

4. Light detector module according any of claims 1 - 3, the third inclination angle γ being mainly equal to (α + β) / 2.

5. Light detector module according any of claims 1 - 4, the end of each protection case being truncated by mainly parallel truncation planes P2, P2' etc.

6. Light detector module according any of claims 1 - 4, the end of each protection case being truncated by nearby parallel truncation planes P2, P2' etc. having a small positive deviation angle ε.

7. Light detector module according to claim 6, said deviation angle ε being between 0 and 5°.

8. Star tracking system comprising a light detector module according to any of the preceding claims.

9. Satellite provided with a star tracking system according to claim 8.
